# EUROPÄISCHE PATENTSCHRIFT

(11) **EP 3 207 302 B1**
(45) Veröffentlichungstag und Bekanntmachung des Hinweises auf die Patenterteilung: **09.01.2019**
(21) Anmeldenummer: 15781345.2
(22) Anmeldetag: 15.10.2015
(51) Int. Cl.: F16P 3/18, B21D 5/02, B21D 43/00, B21D 55/00, B25B 9/02, B23Q 7/04, B21J 15/00

(54) **HALTEVORRICHTUNG FÜR EIN TESTBLECH**
HOLDING DEVICE FOR A TEST SHEET
DISPOSITIF DE RETENUE POUR UNE TÔLE-TÉMOIN

(30) Priorität: 15.10.2014 DE 202014104915 U
(43) Veröffentlichungstag der Anmeldung: 23.08.2017
(73) Patentinhaber: Broetje-Automation GmbH, 26180 Rastede (DE)
(72) Erfinder: BRUNKEN, Klaus, 26349 Jaderberg (DE)
(74) Vertreter: Gottschald, Jan
(86) Internationale Anmeldenummer: PCT/EP2015/073888
(87) Internationale Veröffentlichungsnummer: WO 2016/059159

(56) Entgegenhaltungen:
- EP-A1- 1 772 204
- WO-A1-2006/122379

## Beschreibung

Die Erfindung betrifft eine Haltevorrichtung für ein Testblech gemäß dem Gegenstand von Anspruch 1 und eine Werkzeugmaschine zur Metallbearbeitung gemäß dem Gegenstand von Anspruch 15. Aus EP1772204 ist z.B. eine gattungsgemäße Haltevorrichtung bekannt.

Bei Werkzeugmaschinen zur Metallbearbeitung und speziell bei Nietmaschinen zum Setzen von Nietverbindungen gibt es regelmäßig den Wunsch, den Metallbearbeitungsvorgang bzw. den Nietsetzvorgang probeweise an einer Grundwerkstoffprobe durchzuführen. Diese Grundwerkstoffprobe wird in der Regel durch ein Blech oder durch Blechpakete gebildet, welches Blech oder Blechpaket auch als Testblech oder Testcoupon bezeichnet wird.

Speziell im Bereich der Luft- und Raumfahrtproduktion ist häufig die Bearbeitung sehr großer Werkstücke vorgesehen, sodass ein gegenüber diesen Werkstücken kleiner Testcoupon nicht ohne Weiteres durch die für die großen Werkstücke vorgesehenen Positioniervorrichtungen gehandhabt werden kann. Aus diesem Grunde wird gerade in diesem Bereich regelmäßig der Testcoupon manuell von einem Benutzer derart in einem Arbeitsbereich der Werkzeugmaschine positioniert, dass der Metallbearbeitungsschritt an dem Testcoupon vorgenommen werden kann.

Dieser Ansatz ist in verschiedener Hinsicht problematisch. Einerseits erfordert er, dass der Benutzer sich insbesondere mit seinen Händen in den Arbeitsbereich der Maschine begibt, was im regulären Betrieb gerade verhindert werden soll und ein Arbeitsunfallrisiko darstellt. Auch um einen solchen Eintritt eines Benutzers in den Arbeitsbereich oder überhaupt eine Annäherung daran zu vermeiden, setzt das Auslösen des Metallbearbeitungsschrittes voraus, dass der entsprechende Benutzer regelmäßig mit beiden Händen eine Steueranordnung der Werkzeugmaschine bedient. Diese Steueranordnung ist in Bezug auf den Arbeitsbereich regelmäßig so angeordnet, dass der die Steueranordnung bedienende Benutzer sich in hinreichendem Abstand zu dem Arbeitsbereich befindet, weswegen er regelmäßig nicht gleichzeitig den Testcoupon in den Arbeitsbereich halten kann. Daher sind zum Vornehmen des Metallbearbeitungsschrittes an dem Testcoupon zwei Personen notwendig. Die Notwendigkeit der Abstimmung zwischen diesen beiden Personen erhöht die Wahrscheinlichkeit eines Auslösens des Metallbearbeitungsschrittes zur Unzeit und damit auch das Arbeitsunfallrisiko.

Hiervon ausgehend besteht das Problem der Erfindung darin, das Vornehmen eines probeweisen Metallbearbeitungsschrittes an einem Testblech durch eine Werkzeugmaschine sowohl einfacher als auch sicherer zu gestalten.

Das genannte Problem wird für eine Haltevorrichtung für ein Testblech durch den Gegenstand von Anspruch 1 und für eine Werkzeugmaschine zur Metallbearbeitung durch den Gegenstand von Anspruch 15 gelöst.

Wesentlich für die Erfindung ist die Erkenntnis, dass eine Haltevorrichtung sowohl mit einer Aufnahmeanordnung für das Testblech, durch welche das aufgenommene Testblech an der richtigen Stelle, mit der richtigen Ausrichtung und unter Wahrung eines hinreichenden Abstandes des Benutzers zum Arbeitsbereich in diesem positioniert werden kann, als auch mit einer Tasteranordnung zum Auslösen des Metallbearbeitungsschrittes an der Werkzeugmaschine versehen werden kann. Auf diese Weise ist es einem einzelnen Benutzer möglich, das Testblech sicher im Arbeitsbereich der Werkzeugmaschine zu positionieren und dabei gleichzeitig das Auslösen des Metallbearbeitungsschrittes unter eigener Kontrolle zu haben. Auf diese Weise wird das Durchführen des Metallbearbeitungsschrittes an dem Testblech sicherer und kann durch eine einzelne Person ausgeführt werden.

Die bevorzugten Ausgestaltungen der Unteransprüche 3 bis 5 sowie 8 und 9 betreffen das Erfordernis, ein beidhändiges Greifen der Haltevorrichtung zu gewährleisten, sodass praktisch ausgeschlossen werden kann, dass eine Hand des Benutzers der Haltevorrichtung sich bei Auslösen des Metallbearbeitungsschrittes in einem Gefahrenbereich der Werkzeugmaschine befindet.

Aus dem Stand der Technik sind bereits tragbare Tasteranordnungen zur Freigabe von sicherheitskritischen Vorgängen, z. B. sogenannte Zustimmungs- oder Freigabeschalter, bekannt. Die bevorzugte Ausgestaltung des Unteranspruchs 6 sieht nun die Möglichkeit vor, solche Tasteranordnungen als Komponente in einer vorschlagsgemäßen Haltevorrichtung zu verwenden. Auf diese Weise kann die von den bekannten Tasteranordnungen gewährleistete und in der Regel zertifizierte Verlässlichkeit für die vorschlagsgemäße Lösung eingesetzt werden.

Der Unteranspruch 11 wiederum betrifft eine Ausgestaltung der Tasteranordnung, welche jeweils ein vollständiges Umgreifen der Tasteranordnung durch den Benutzer zur Betätigung erforderlich macht.

Die Unteransprüche 12 und 13 sehen eine bevorzugte Variante vor, nach welcher die Tasteranordnung einen Betätigungsweg mit unterschiedlichen Betätigungsbereichen aufweist. Zum Auslösen des Metallbearbeitungsschrittes ist dann eine Betätigung in einem definierten Betätigungsbereich erforderlich.

Der bevorzugte Unteranspruch 14 betrifft eine ergonomisch besonders vorteilhafte Konstruktion der Haltevorrichtung, welche das genaue Positionieren des Testbleches mit gleichzeitig sehr guter Kontrolle über das Auslösen des Metallbearbeitungsschrittes erlaubt.

Weitere Einzelheiten, Merkmale, Ziele und Vorteile der vorliegenden Erfindung werden nachfolgend anhand einer lediglich ein Ausführungsbeispiel wiedergebenden Zeichnung näher erläutert. In der Zeichnung zeigt
- Fig. 1: eine Seitenansicht auf eine Werkzeugmaschine zur Metallbearbeitung mit einer vorschlagsgemäßen Haltevorrichtung,

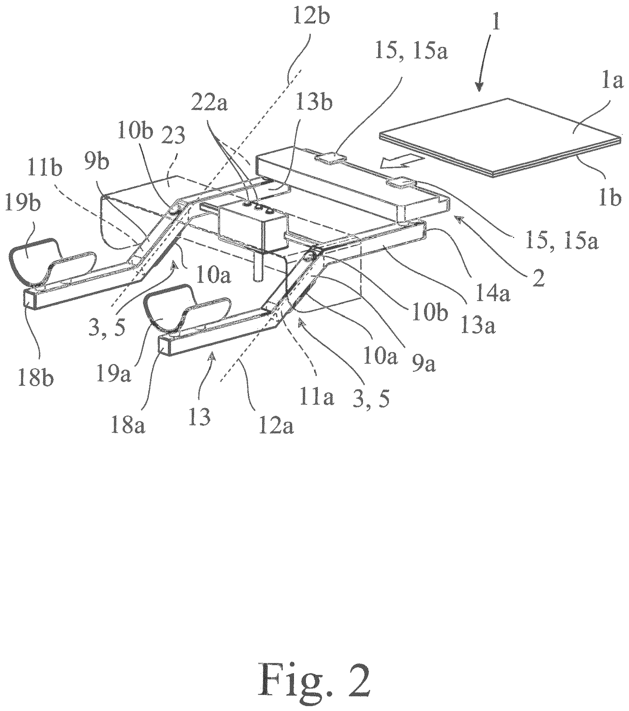

- Fig. 2: eine Perspektivansicht von schräg oben auf die vorschlagsgemäße Haltevorrichtung der Fig. 1 und

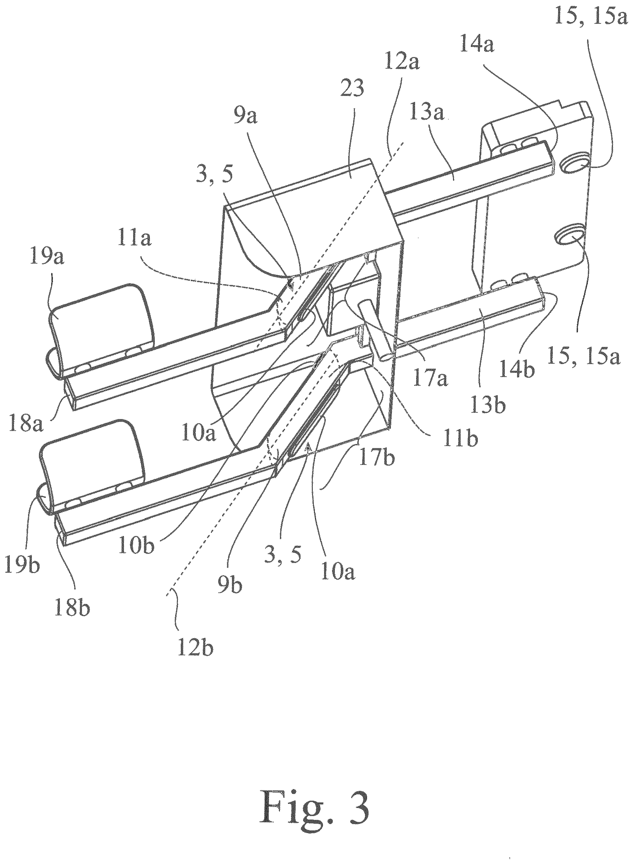

- Fig. 3: eine Perspektivansicht von schräg unten auf die vorschlagsgemäße Haltevorrichtung der Fig. 1.

Die vorschlagsgemäße Haltevorrichtung für ein Testblech 1 weist eine Aufnahmeanordnung 2 zum insbesondere formschlüssigen Eingriff mit dem Testblech 1 auf. Bei dem Testblech 1 kann es sich um ein beliebiges, insbesondere flächiges Werkstück oder um ein solches Blechpaket handeln, an dem probeweise ein Metallbearbeitungsschritt durchgeführt werden soll. Im vorliegenden Beispiel handelt es sich bei dem Testblech 1 um zwei einzelne und übereinandergestapelte Aluminiumbleche 1a, b, welche mit einer zu setzenden Nietverbindung miteinander verbunden werden sollen. Die Aufnahmeanordnung 2 ist dazu eingerichtet, einen Eingriff mit dem Testblech 1 herzustellen, durch welchen Eingriff das Testblech 1 gehalten, hochgehoben und positioniert werden kann. Zusätzlich zu diesem bevorzugt formschlüssigen Eingriff kann ein Herausfallen des Testblechs 1 aus der Aufnahmeanordnung 2 auch noch mit weiteren Maßnahmen verhindert werden, welche untenstehend noch genauer beschrieben werden.

Die vorschlagsgemäße Haltevorrichtung weist ferner eine starr mit der Aufnahmeanordnung 2 verbundene Griffanordnung 3 für einen Benutzer 4 zum Positionieren des Testblechs 1 auf. Das bedeutet, dass der Benutzer 4 die Griffanordnung 3 greifen und durch Bewegen der Griffanordnung 3 dank der starren Verbindung die Aufnahmeanordnung 2 - und mit ihr das Testblech 1, mit dem es in Eingriff steht - analog bewegen und damit auch ausrichten und positionieren kann.

Daneben weist die vorschlagsgemäße Haltevorrichtung eine Tasteranordnung 5 zum Erzeugen eines Schaltsignals basierend auf einer Betätigung durch den Benutzer 4 auf. Vorzugsweise erzeugt die Tasteranordnung 5 das Schaltsignal, wenn die Tasteranordnung 5 durch den Benutzer 4, insbesondere durch Drücken, betätigt wird.

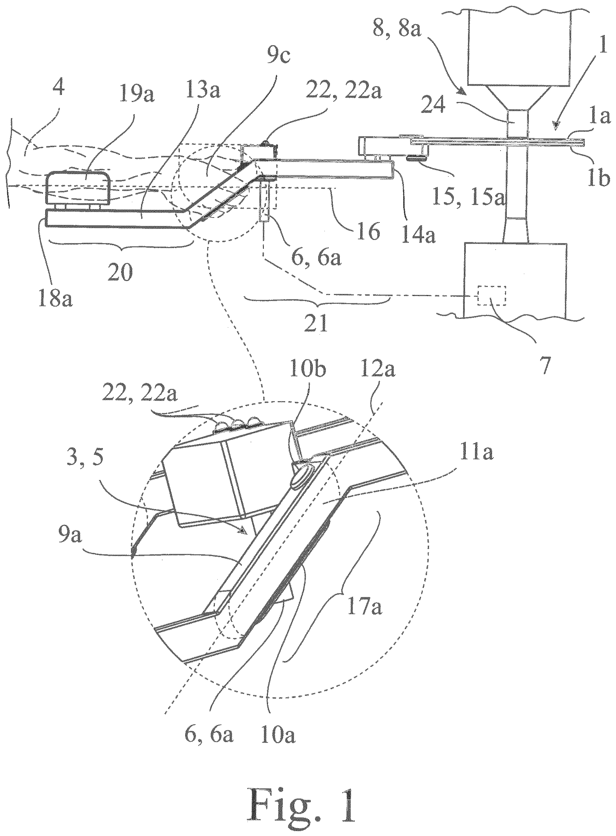

Gemäß einer bevorzugten Ausführungsform weist die Haltevorrichtung eine Sendevorrichtung 6 zum Übertragen des Schaltsignals auf. Vorzugsweise wird das Schaltsignal an eine Steuereinrichtung 7 einer Werkzeugmaschine 8 übertragen, welche Steuereinrichtung 7 und Werkzeugmaschine 8 ebenfalls in der Fig. 1 dargestellt sind. Bei der Sendevorrichtung 6 kann es sich sowohl um eine Vorrichtung zur drahtlosen Übertragung als auch - wie hier - um eine drahtgebundene Übertragungsanordnung 6a handeln. Die Werkzeugmaschine 8 ist in dem vorliegenden Ausführungsbeispiel eine Nietmaschine 8a. Die Sendevorrichtung 6 kann auch dazu eingerichtet sein, Signale und Daten von der Steuereinrichtung 7 zu empfangen.

Prinzipiell könnte die Haltevorrichtung dazu eingerichtet sein, an einem Befestigungspunkt an oder bei der Werkzeugmaschine 8 z. B. schwenkbar angebracht zu werden. Bevorzugt ist jedoch, dass die Haltevorrichtung tragbar ist, und zwar speziell durch Greifen der Griffanordnung 3 durch den Benutzer 4. Das erleichtert die Benutzung und erhöht die Flexibilität der Haltevorrichtung.

Bevorzugt und wie in dem Ausführungsbeispiel dargestellt ist die Griffanordnung 3 zum beidhändigen Greifen durch den Benutzer 4 eingerichtet. Dies erleichtert einerseits das Tragen und Ausrichten der Haltevorrichtung und sorgt weiter dafür, dass der Benutzer 4 auch tatsächlich beide Hände zum Greifen der Griffanordnung 3 verwendet. Dies kann dadurch verwirklicht werden, dass die Griffanordnung 3 zwei insbesondere beabstandete Einzelgriffe 9a, b für jeweils eine Hand 9c des Benutzers 4 aufweist. Diese Einzelgriffe 9a, b sind speziell für ein Umgreifen durch jeweils eine Hand 9c eingerichtet. Damit ist eine bestimmte Position der Hände durch die Griffanordnung 3 vorgegeben.

Damit diese Position der Hände des Benutzers 4 auch zum Zeitpunkt des Erzeugens des Schaltsignals gewährleistet ist, ist vorzugsweise die Tasteranordnung 5 so angeordnet, dass eine Betätigung durch den Benutzer 4 ein insbesondere beidhändiges Greifen der Griffanordnung 3 durch den Benutzer 4 voraussetzt. Hier ist weiter bevorzugt, dass dieses beidhändige Greifen ein Umgreifen der beiden Einzelgriffe 9a, b durch die jeweils eine Hand 9c des Benutzers 4 voraussetzt.

Auf vorteilhafte Art und Weise werden die Funktionalität zum Greifen der Haltevorrichtung und diejenige zum Erzeugen des Schaltsignals dadurch vereint, dass die Tasteranordnung 5 einen vorzugsweise lösbaren Bestandteil der Griffanordnung 3 bildet. Auf diese Weise - welche untenstehend noch genauer beschrieben wird - kann eine bereits "von der Stange" (off the shelf) verfügbare Tasteranordnung 5, z. B. umfassend die oben bereits erwähnten Zustimmungs- und Freigabeschalter, verwendet und in die in ihrem Aufbau dann rein mechanische Griffanordnung 3 eingesetzt werden.

Um den erhöhten Sicherheitsanforderungen beim Erzeugen des Schaltsignals gerecht zu werden und insbesondere eine versehentliche Betätigung zu vermeiden, ist bevorzugt vorgesehen, dass die Tasteranordnung 5 einen Hauptfingertaster 10a und einen Nebenfingertaster 10b aufweist, die jeweils durch unterschiedliche Finger derselben Hand des Benutzers 4 betätigbar sind. Dabei kann - wie in dem gezeigten Ausführungsbeispiel - der Nebenfingertaster 10b zur Betätigung durch einen Daumen dieser Hand und ein Hauptfingertaster 10a zur Betätigung durch insbesondere den Mittel- und Ringfinger, ggf. auch durch den Zeigefinger, derselben Hand vorgesehen sein. Alternativ kann auch ein Hauptfingertaster 10a zur Betätigung durch den Zeigefinger und wiederum ein Nebenfingertaster 10b zur Betätigung durch Mittel- und Ringfinger vorgesehen sein. In diesem Fall wären sowohl der Hauptfingertaster 10a als auch der Nebenfingertaster 10b auf derselben Seite des jeweiligen Einzelgriffs 9a, b platziert anstatt - wie im vorliegenden Fall - auf gegenüberliegenden Seiten des jeweiligen Einzelgriffs 9a, b. Im Prinzip ist dabei die Zuordnung eines Tasters als Hauptfingertaster 10a oder als Nebenfingertaster 10b beliebig.

Ebenso ist es bevorzugt, dass die Tasteranordnung 5 ein längliches Tastergerät 11a, b aufweist und der Hauptfingertaster 10a und der Nebenfingertaster 10b zueinander versetzt entlang einer Tasterlängsachse 12a, b des Tastergeräts 11a, b angeordnet sind, was speziell in der Fig. 1 dargestellt ist. Hier kann es speziell sein, dass - wie ebenfalls in der Fig. 1 dargestellt - das Tastergerät 11a, b einen Bestandteil eines Einzelgriffes 9a, b bildet oder in einem Einzelgriff 9a, b angeordnet ist. Damit wird das Gewährleisten eines gleichzeitigen Greifens und Auslösens besonders einfach verwirklicht. Unter einem "Tastergerät" kann hier und nachfolgend sowohl ein separates Gerät mit Tastern mit einem eigenen Tastergehäuse als auch eine Vorrichtung mit Tastern verstanden werden, welche einstückig bzw. monolithisch mit dem jeweiligen Einzelgriff 9a, b ausgebildet ist und sich folglich mit diesem ein Gehäuse teilt. Das Tastergerät kann auch lösbar in dem Einzelgriff 9a, b angeordnet sein.

Um das Risiko eines unbeabsichtigten Auslösens des Schaltsignals noch weiter zu verringern ist bevorzugt vorgesehen, dass die Tasteranordnung 5 das Schaltsignal nur dann erzeugt, wenn der Hauptfingertaster 10a und der Nebenfingertaster 10b insbesondere gleichzeitig betätigt werden. Weiter insbesondere kann hierbei die gleichzeitige Betätigung des Hauptfingertasters 10a und des Nebenfingertasters 10b ein Umgreifen des jeweiligen Tastergeräts 11a, b voraussetzen.

Wie in dem Ausführungsbeispiel der Fig. 1 dargestellt ist es bevorzugt, dass die Tasteranordnung 5 zwei Tastergeräte 11a, b aufweist. Die Tastergeräte 11a, b sind hier speziell an jeweils einem Einzelgriff 9a, b und insbesondere innerhalb des jeweiligen Einzelgriffs 9a, b angeordnet. Ebenso ist es bevorzugt, dass beide Tastergeräte 11a, b jeweils einen Hauptfingertaster 10a und einen Nebenfingertaster 10b aufweisen.

Hierauf aufbauend wird die Auslösesicherheit noch weiter erhöht, wenn vorgesehen ist, dass die Tasteranordnung 5 das Schaltsignal nur dann erzeugt, wenn eine insbesondere gleichzeitige Betätigung an beiden Tastergeräten 11a, b erfolgt und vorzugsweise nur dann, wenn der Hauptfingertaster 10a beider Tastergeräte 11a, b und der Nebenfingertaster 10b mindestens eines Tastergeräts 11a, b - entsprechend also insgesamt mindestens drei Taster - betätigt werden. Vorzugsweise ist es dabei beliebig, ob es sich um den Nebenfingertaster 10b des einen oder anderen Tastergeräts 11a, b handelt. Auf diese Weise kann durch eine längere Betätigung der Hauptfingertaster 10a ein Grundbereitschaftszustand zum Erzeugen des Schaltsignals hergestellt werden, in welchem bereits die korrekte Platzierung der Hände des Benutzers 4 an der Tasteranordnung 5 gewährleistet. Zur präzisen Bestimmung des genauen Erzeugungszeitpunktes des Schaltsignals reicht dann die Betätigung eines einzelnen Nebenfingertasters 10b, wobei die spezielle Wahl des Tastergeräts 11a, b dann einfach davon abhängig sein kann, ob der Benutzer 4 Rechtshänder oder Linkshänder ist.

Es kann auch jedes Tastergerät 11a, b mehr als zwei Fingertaster, also nicht nur einen Hauptfingertaster 10a und einen Nebenfingertaster 10b, aufweisen, wobei dann auch die Betätigung von mehr als zwei Fingertastern und speziell von allen Fingertastern beider Tastergeräte 11a, b zum Auslösen des Schaltsignals erforderlich sein kann.

Eine Besonderheit bei Sicherheitsschaltern, zu denen die oben erwähnten Freigabe- und Zustimmungsschalter zählen, ist die, dass die einzelnen Taster einen Betätigungsweg mit mehreren Betätigungsbereichen aufweist. Bei Zustimmungsschaltern kann ein riskanter Bearbeitungsschritt nur dann eingeleitet werden, wenn der entsprechende Taster in einem mittleren Betätigungsbereich gehalten bzw. betätigt wird. Auf diese Weise ist gewährleistet, dass sowohl ein völliges Loslassen des Tasters als auch eine stärkere Betätigung - denn es sind beide Reaktionen reflexhaft in einer Schrecksekunde denkbar - den riskanten Bearbeitungsschritt abbricht und z. B. zu einer Notausschaltung führt. Dementsprechend ist es auch vorliegend bevorzugt, dass die Betätigung der Tasteranordnung 5 entlang eines Betätigungswegs mit mindestens zwei Betätigungsbereichen erfolgt. Speziell können dabei der Hauptfingertaster 10a und/oder der Nebenfingertaster 10b, insbesondere beider Tastergeräte 11a, b, jeweils mindestens zwei Betätigungsbereiche - und damit wie im oben genannten Beispiel des Sicherheitsschalters auch drei Betätigungsbereiche - aufweisen.

Diese Variante kann vorteilhafterweise dadurch präzisiert werden, dass die Betätigungsbereiche einen Aktivbereich und einen Inaktivbereich aufweisen und dass das Schaltsignal nur bei einer Betätigung in dem Aktivbereich erzeugt wird. Speziell wird - beim Vorhandensein mehrerer Taster - das Schaltsignal nur bei einer insbesondere gleichzeitigen Betätigung von mehr als einem Taster in dem Aktivbereich erzeugt. Wenn mehrere Tastergeräte 11a, b vorhanden sind, kann es entsprechend bevorzugt sein, dass das Schaltsignal nur bei einer Betätigung der Hauptfingertaster 10a beider Tastergeräte 11a, b und des Nebenfingertasters 10b mindestens eines Tastergeräts 11a, b in dem Aktivbereich erzeugt wird.

Im Hinblick auf die konstruktive Ausgestaltung der vorschlagsgemäßen Haltevorrichtung ist es bevorzugt, dass die Haltevorrichtung einen Rahmen 13 mit zwei im Wesentlichen parallel angeordneten und im Wesentlichen länglich ausgebildeten Trägern 13a, b aufweist. Dabei ist es bevorzugt, dass - wie im Ausführungsbeispiel dargestellt - die Aufnahmeanordnung 2 an jeweils einem benachbarten Längsende 14a, b beider Träger 13a, b angeordnet ist. Unter dem jeweils benachbarten Längsende 14a, b beider Träger im vorliegenden Sinne ist ein Paar aus einem ersten Längsende 14a eines ersten Trägers 13a und einem zweiten Längsende 14b eines zweiten Trägers 13b zu verstehen, welche - bezogen auf die parallele Ausrichtung der Träger 13a, b - in dieselbe Richtung weisen. Für eine besonders zuverlässige Aufnahme des Testblechs 1 kann die Aufnahmeanordnung 2 eine Fixieranordnung 15 zum Befestigen des Testblechs 1 aufweisen, bei welcher Fixieranordnung 15 es sich vorliegend um eine Klemmstempelanordnung 15a handelt.

Weiter ist bevorzugt vorgesehen, dass die Griffanordnung 3 an einem jeweiligen Griffbereich 17a, b der Träger 13a, b angeordnet ist. Durch die im Wesentlichen längliche Ausbildung weisen die Träger 13a, b eine Längsachse 16 auf. Dieser jeweilige Griffbereich 17a, b kann dann auch - wie in der Zeichnung dargestellt - jeweils im Wesentlichen mittig bezogen auf diese Längsachse 16 angeordnet sein. Ebenso ist es bevorzugt, dass der jeweilige Griffbereich 17a, b winklig zu einer Längsachse 16 der Träger 13a, b angeordnet ist. Die dadurch entstehende "Schwanenhalsform" der Träger 13a, b, welche auch aus der Zeichnung hervorgeht, bedeutet keine Einschränkung der im Wesentlichen länglichen Ausbildung der Träger 13a, b oder einen Widerspruch zu dem Vorhandensein einer Längsachse 16. Bevorzugt ist ebenso, dass die Einzelgriffe 9a, b an jeweils einem Träger 13a, b angeordnet sind.

Weitere vorteilhafte konstruktive Ausgestaltungen sehen vor, dass an benutzerseitigen Längsenden der Träger 13a, b - Benutzerenden 18a, b - Unterarmauflagen 19a, b zum Stützen eines jeweiligen Benutzerarmes vorgesehen sind. Vorzugsweise entspricht dabei eine Auflageentfernung 20 von den Unterarmauflagen 19a, b zu dem Griffbereich 17a, b entlang der Längsachse 16 im Wesentlichen einer Aufnahmeentfernung 21 von der Aufnahmeanordnung 2 zu dem Griffbereich 17a, b entlang der Längsachse 16. Solche Unterarmauflagen 19a, b erleichtern das Tragen von schwereren Testblechen 1 mit der Haltevorrichtung.

Ebenso ist es bevorzugt, dass die Halteanordnung eine Anzeigevorrichtung 22 mit Leuchtanzeigen 22a zur Anzeige eines Betätigungszustandes der Tasteranordnung 5 aufweist. Diese Anzeigevorrichtung 22 kann auch Signale von der Steuereinrichtung 7 der Werkzeugmaschine 8 wiedergeben. Schließlich ist vorzugsweise und wie in der Zeichnung wiedergegeben vorgesehen, dass die Halteanordnung eine Abdeckanordnung 23 aufweist, welche die Griffanordnung und insbesondere die Einzelgriffe 9a, b in Richtung der Aufnahmeanordnung 2 abdeckt. Insbesondere kann die Abdeckanordnung 23 zumindest bereichsweise eine Abdeckebene bilden, in welcher auch die Längsachse 16 liegt.

Eine vorschlagsgemäße Werkzeugmaschine 8 zur Metallbearbeitung, und hier insbesondere zum Herstellen von Nietverbindungen, weist einen Endeffektor 24 auf, welcher hier speziell zum Setzen von Nieten eingerichtet ist. Die vorschlagsgemäße Werkzeugmaschine 8 weist ebenso eine Steuereinrichtung 7 zum Ansteuern des Endeffektors 24 sowie eine vorschlagsgemäße Haltevorrichtung auf. Die vorschlagsgemäße Werkzeugmaschine ist dadurch gekennzeichnet, dass die Steuereinrichtung 7 dazu eingerichtet ist, den Endeffektor 24 auf das Schaltsignal auslösend anzusteuern. Folglich wird im vorliegenden Ausführungsbeispiel das Herstellen einer Nietverbindung an dem Testblech 1 ausgelöst. Weitere bevorzugte Ausgestaltungen der vorschlagsgemäßen Werkzeugmaschine ergeben sich aus den entsprechenden Merkmalen und Ausgestaltungen der vorschlagsgemäßen Haltevorrichtung.

## Patentansprüche

1. Haltevorrichtung für ein Testblech (1), mit einer Aufnahmeanordnung (2) zum Eingriff mit dem Testblech (1), einer starr mit der Aufnahmeanordnung (2) verbundenen Griffanordnung (3) für einen Benutzer (4) zum Positionieren des Testblechs (1),
**gekennzeichnet durch**
eine Tasteranordnung (5) zum Erzeugen eines Schaltsignals basierend auf einer Betätigung durch den Benutzer (4).

2. Haltevorrichtung nach Anspruch 1, **dadurch gekennzeichnet, dass** die Haltevorrichtung eine Sendevorrichtung (6) zum Übertragen des Schaltsignals, vorzugsweise an eine Steuereinrichtung (7) einer Werkzeugmaschine (8), umfasst.

3. Haltevorrichtung nach Anspruch 1 oder 2, **dadurch gekennzeichnet, dass** die Haltevorrichtung, insbesondere durch Greifen der Griffanordnung (3) durch den Benutzer (4), tragbar ist.

4. Haltevorrichtung nach einem der Ansprüche 1 bis 3, **dadurch gekennzeichnet, dass** die Griffanordnung (3) zum beidhändigen Greifen durch den Benutzer (4) eingerichtet ist, vorzugsweise, wobei die Griffanordnung (3) zwei insbesondere beabstandete Einzelgriffe (9a, b), weiter insbesondere zum Umgreifen, für jeweils eine Hand (9c) des Benutzers (4) aufweist.

5. Haltevorrichtung nach einem der Ansprüche 1 bis 4, **dadurch gekennzeichnet, dass** die Tasteranordnung (5) so angeordnet ist, dass eine Betätigung durch den Benutzer (4) ein insbesondere beidhändiges Greifen der Griffanordnung (3) durch den Benutzer (4) voraussetzt, vorzugsweise, ein Umgreifen der beiden Einzelgriffe (9a, b) durch die jeweils eine Hand (9c) des Benutzers (4) voraussetzt.

6. Haltevorrichtung nach Anspruch 5, **dadurch gekennzeichnet, dass** die Tasteranordnung (5) einen, vorzugsweise lösbaren, Bestandteil der Griffanordnung (3) bildet.

7. Haltevorrichtung nach einem der Ansprüche 1 bis 6, **dadurch gekennzeichnet, dass** die Tasteranordnung (5) einen Hauptfingertaster (10a) und einen Nebenfingertaster (10b) aufweist, die jeweils durch unterschiedliche Finger der selben Hand des Benutzers (4) betätigbar sind, wobei die Tasteranordnung (5) ein längliches Tastergerät (11a, b) aufweist und der Hauptfingertaster (10a) und der Nebenfingertaster (10b) zueinander versetzt entlang einer Tasterlängsachse (12a, b) des Tastergeräts (11a, b) angeordnet sind, insbesondere, dass das Tastergerät (11a, b) einen Bestandteil eines Einzelgriffes (9a, b) bildet oder in einem Einzelgriff (9a, b) angeordnet ist.

8. Haltevorrichtung nach Anspruch 7, **dadurch gekennzeichnet, dass** die Tasteranordnung (5) das Schaltsignal nur dann erzeugt, wenn der Hauptfingertaster (10a) und der Nebenfingertaster (10b) insbesondere gleichzeitig betätigt werden, vorzugsweise, dass die gleichzeitige Betätigung des Hauptfingertasters (10a) und des Nebenfingertasters (10b) ein Umgreifen des jeweiligen Tastergeräts (11a, b) voraussetzt.

9. Haltevorrichtung nach einem der Ansprüche 1 bis 8, **dadurch gekennzeichnet, dass** die Tasteranordnung (5) zwei Tastergeräte (11a, b) aufweist, vorzugsweise, wobei die Tastergeräte (12a, b) an jeweils einem Einzelgriff (9a, b), insbesondere innerhalb jeweils eines Einzelgriffs (9a, b), angeordnet sind.

10. Haltevorrichtung nach Anspruch 9, **dadurch gekennzeichnet, dass** beide Tastergeräte (11a, b) jeweils einen Hauptfingertaster (10a) und einen Nebenfingertaster (10b) aufweisen.

11. Haltevorrichtung nach Anspruch 9 oder 10, **dadurch gekennzeichnet, dass** die Tasteranordnung (5) das Schaltsignal nur dann erzeugt, wenn eine insbesondere gleichzeitige Betätigung an beiden Tastergeräten (11a, b) erfolgt, vorzugsweise das Schaltsignal nur dann erzeugt, wenn der Hauptfingertaster (10a) beider Tastergeräte (11a, b) und der Nebenfingertaster (10b) mindestens eines Tastergeräts (11a, b) betätigt werden.

12. Haltevorrichtung nach einem der Ansprüche 1 bis 11, **dadurch gekennzeichnet, dass** die Betätigung der Tasteranordnung (5) entlang eines Betätigungswegs mit mindestens zwei Betätigungsbereichen erfolgt, vorzugsweise, wobei der Hauptfingertaster (10a) und/oder der Nebenfingertaster (10b), insbesondere beider Tastergeräte (11a, b), jeweils mindestens zwei Betätigungsbereiche aufweisen.

13. Haltevorrichtung nach Anspruch 12, **dadurch gekennzeichnet, dass** die Betätigungsbereiche einen Aktivbereich und einen Inaktivbereich aufweisen und dass das Schaltsignal nur bei einer Betätigung in dem Aktivbereich erzeugt wird, vorzugsweise, dass das Schaltsignal nur bei einer insbesondere gleichzeitigen Betätigung der Hauptfingertaster (10a) beider Tastergeräte (11a, b) und des Nebenfingertasters (10b) mindestens eines Tastergeräts (11a, b) in dem Aktivbereich erzeugt wird.

14. Haltevorrichtung nach einem der Ansprüche 1 bis 13, **dadurch gekennzeichnet, dass** die Haltevorrichtung einen Rahmen (13) mit zwei im Wesentlichen parallel angeordneten und im Wesentlichen länglich ausgebildeten Trägern (13a, b) aufweist, vorzugsweise, wobei die Aufnahmeanordnung (2) an jeweils einem benachbarten Längsende (14a, b) beider Träger (13a, b) angeordnet ist, insbesondere, wobei die Griffanordnung (3) an einem jeweiligen, insbesondere zu einer Längsachse (16) der Träger (13a, b) winkligen, Griffbereich (17a, b) der Träger (13a, b) angeordnet ist, weiter vorzugsweise, dass die Einzelgriffe (9a, b) an jeweils einem Träger (13a, b) angeordnet sind.

15. Werkzeugmaschine (8) zur Metallbearbeitung, insbesondere zum Herstellen von Nietverbindungen, mit einem Endeffektor (24), insbesondere zum Setzen von Nieten, einer Steuereinrichtung (7) zum Ansteuern des Endeffektors (24) und einer Haltevorrichtung nach einem der Ansprüche 1 bis 14, **dadurch gekennzeichnet, dass** die Steuereinrichtung (7) dazu eingerichtet ist, den Endeffektor (24) auf das Schaltsignal auslösend anzusteuern.

## Claims

1. Holding device for a test sheet (1), with a receiving arrangement (2) for engagement with the test sheet (1), a handle arrangement (3) connected rigidly to the receiving arrangement (2) for a user (4) for positioning the test sheet (1), **characterized by** a pushbutton arrangement (5) for producing a switching signal on the basis of an actuation by the user (4).

2. Holding device according to Claim 1, **characterized in that** the holding device comprises a transmitting device (6) for transmitting the switching signal, preferably to a controller (7) of a machine tool (8).

3. Holding device according to Claim 1 or 2, **characterized in that** the holding device is portable, in particular by the user (4) gripping the handle arrangement (3).

4. Holding device according to one of Claims 1 to 3, **characterised in that** the handle arrangement (3) is configured for gripping by the user (4) with both hands, preferably wherein the handle arrangement (3) has two, in particular spaced-apart, individual handles (9a, b), furthermore in particular for grasping, by one hand (9c) each of the user (4).

5. Holding device according to one of Claims 1 to 4, **characterized in that** the pushbutton arrangement (5) is arranged in such a manner that an actuation by the user (4) requires in particular gripping of the handle arrangement (3) by the user (4) with both hands, and preferably requires grasping of the two individual handles (9a, b) by one hand each (9c) of the user (4).

6. Holding device according to Claim 5, **characterized in that** the pushbutton arrangement (5) forms a, preferably releasable, part of the handle arrangement (3).

7. Holding device according to one of Claims 1 to 6, **characterised in that** the pushbutton arrangement (5) has a main finger pushbutton (10a) and a secondary finger pushbutton (10b) which are both actuable by different fingers of the same hand of the user (4), wherein the pushbutton arrangement (5) has an elongate pushbutton unit (11a, b), and the main finger pushbutton (10a) and the secondary finger pushbutton (10b) are arranged offset with respect to each other along a pushbutton longitudinal axis (12a, b) of the pushbutton unit (11a, b), in particular **in that** the pushbutton unit (11a, b) forms part of an individual handle (9a, b) or is arranged in an individual handle (9a, b).

8. Holding device according to Claim 7, **characterized in that** the pushbutton arrangement (5) produces the switching signal only if the main finger pushbutton (10a) and the secondary finger pushbutton (10b) are actuated in particular simultaneously, preferably **in that** the simultaneous actuation of the main finger pushbutton (10a) and of the secondary finger pushbutton (10b) requires grasping of the respective pushbutton unit (11a, b).

9. Holding device according to one of Claims 1 to 8, **characterized in that** the pushbutton arrangement (5) has two pushbutton units (11a, b), preferably wherein the pushbutton units (12a, b) are arranged on one individual handle (9a, b) each, in particular within one individual handle (9a, b) each.

10. Holding device according to Claim 9, **characterized in that** the two pushbutton units (11a, b) each have a main finger pushbutton (10a) and a secondary finger pushbutton (10b).

11. Holding device according to Claim 9 or 10, **characterized in that** the pushbutton arrangement (5) produces the switching signal only if an in particular simultaneous actuation takes place on both pushbutton units (11a, b), preferably produces the switching signal only if the main finger pushbutton (10a) of the two pushbutton units (11a, b) and the secondary finger pushbutton (10b) of at least one pushbutton unit (11a, b) are actuated.

12. Holding device according to one of Claims 1 to 11, **characterized in that** the actuation of the pushbutton arrangement (5) takes places along an actuating path with at least two actuating regions, preferably wherein the main finger pushbutton (10a) and/or the secondary finger pushbutton (10b), in particular of the two pushbutton units (11a, b), each have at least two actuating regions.

13. Holding device according to Claim 12, **characterized in that** the actuating regions have an active region and an inactive region, and **in that** the switching signal is produced only upon an actuation in the active region, preferably **in that** the switching signal is produced only if an in particular simultaneous actuation of the main finger pushbutton (10a) of the two pushbutton units (11a, b) and of the secondary finger pushbutton (10b) of at least one pushbutton unit (11a, b) in the active region takes place.

14. Holding device according to one of Claims 1 to 13, **characterized in that** the holding device has a frame (13) with two supports (13a, b) which are arranged substantially parallel and are of substantially elongate design, preferably wherein the receiving arrangement (2) is arranged at an adjacent longitudinal end (14a, b) of each of the two supports (13a, b), in particular wherein the handle arrangement (3) is arranged on a respective handle region (17a, b) of the supports (13a, b), said handle region being angled in particular with respect to a longitudinal axis (16) of the supports (13a, b), furthermore preferably **in that** the individual handles (9a, b) are arranged on one support (13a, b) each.

15. Machine tool (8) for metal working, in particular for producing rivet connections, with an end effector (24), in particular for setting rivets, a controller (7) for activating the end effector (24), and a holding device according to one of Claims 1 to 14, **characterized in that** the controller (7) is configured to activate the end effector (24) so as to trigger the switching signal.

## Revendications

1. Dispositif d'arrêt pour une tôle d'essai (1), comprenant un arrangement d'accueil (2) destiné à venir en prise avec la tôle d'essai (1), un arrangement de poignée (3) relié de manière rigide avec l'arrangement d'accueil (2) pour un utilisateur (4) servant à positionner la tôle d'essai (1), **caractérisé par** un arrangement de touches (5) destinées à générer un signal de commutation en se basant sur un actionnement par l'utilisateur (4).

2. Dispositif d'arrêt selon la revendication 1, **caractérisé en ce que** le dispositif d'arrêt comprend un dispositif d'émission (6) destiné à la transmission du signal de commutation, de préférence à un système de commande (7) d'une machine-outil (8).

3. Dispositif d'arrêt selon la revendication 1 ou 2, **caractérisé en ce que** le dispositif d'arrêt peut être transporté par l'utilisateur (4), notamment en saisissant l'arrangement de poignée (3).

4. Dispositif d'arrêt selon l'une des revendications 1 à 3, **caractérisé en ce que** l'arrangement de poignée (3) est conçu pour la saisie à deux mains par l'utilisateur (4), l'arrangement de poignée (3) possédant de préférence deux poignées individuelles (9a, b), notamment espacées, encore notamment destinées à être enserrées, respectivement pour une main (9c) de l'utilisateur (4).

5. Dispositif d'arrêt selon l'une des revendications 1 à 4, **caractérisé en ce que** l'arrangement de touches (5) est disposé de telle sorte qu'un actionnement par l'utilisateur (4) suppose une saisie à deux mains de l'arrangement de poignée (3) par l'utilisateur (4), de préférence un enserrage des deux poignées individuelles (9a, b) par la main (9c) respective de l'utilisateur (4).

6. Dispositif d'arrêt selon la revendication 5, **caractérisé en ce que** l'arrangement de touches (5) forme un élément constitutif, de préférence amovible, de l'arrangement de poignée (3).

7. Dispositif d'arrêt selon l'une des revendications 1 à 6, **caractérisé en ce que** l'arrangement de touches (5) possède une touche à doigt principal (10a) et une touche à doigt secondaire (10b), lesquelles peuvent respectivement être actionnées par des doigts différents de la même main de l'utilisateur (4), l'arrangement de touches (5) possédant un appareil à touches (11a, b) allongé et la touche à doigt principal (10a) et la touche à doigt secondaire (10b) étant disposées décalées l'une par rapport à l'autre le long d'un axe longitudinal de touche (12a, b) de l'appareil à touches (11a, b), notamment **en ce que** l'appareil à touches (11a, b) forme un élément constitutif d'une poignée individuelle (9a, b) ou est disposé dans une poignée individuelle (9a, b).

8. Dispositif d'arrêt selon la revendication 7, **caractérisé en ce que** l'arrangement de touches (5) ne génère le signal de commutation que lorsque la touche à doigt principal (10a) et la touche à doigt secondaire (10b) sont notamment actionnées simultanément, de préférence **en ce que** l'actionnement simultané de la touche à doigt principal (10a) et de la touche à doigt secondaire (10b) présuppose un enserrage de l'appareil à touches (11a, b) respectif.

9. Dispositif d'arrêt selon l'une des revendications 1 à 8, **caractérisé en ce que** l'arrangement de touches (5) possède deux appareils à touches (11a, b), de préférence les appareils à touches (12a, b) étant disposés respectivement au niveau d'une poignée individuelle (9a, b), notamment à l'intérieur d'une poignée individuelle (9a, b) respective.

10. Dispositif d'arrêt selon la revendication 9, **caractérisé en ce que** les deux appareils à touches (11a, b) possèdent une touche à doigt principal (10a) et une touche à doigt secondaire (10b).

11. Dispositif d'arrêt selon la revendication 9 ou 10, **caractérisé en ce que** l'arrangement de touches (5) ne génère le signal de commutation que lorsqu'un actionnement notamment simultané a lieu au niveau des deux appareils à touches (11a, b), ne génère de préférence le signal de commutation que lorsque la touche à doigt principal (10a) des deux appareils à touches (11a, b) et la touche à doigt secondaire (10b) d'au moins un appareil à touches (11a, b) sont actionnées.

12. Dispositif d'arrêt selon l'une des revendications 1 à 11, **caractérisé en ce que** l'actionnement de l'arrangement de touches (5) s'effectue le long d'une course d'actionnement comprenant au moins deux zones d'actionnement, la touche à doigt principal (10a) et/ou la touche à doigt secondaire (10b), notamment des deux appareils à touches (11a, b), possédant respectivement au moins deux zones d'actionnement.

13. Dispositif d'arrêt selon la revendication 12, **caractérisé en ce que** les zones d'actionnement possèdent une zone active et une zone inactive et **en ce que** le signal de commutation n'est généré que lors d'un actionnement dans la zone active, de préférence **en ce que** le signal de commutation n'est généré que lors d'un actionnement notamment simultané des touches à doigt principal (10a) des deux appareils à touches (11a, b) et de la touche à doigt secondaire (10b) d'au moins un appareil à touches (11a, b) dans la zone active.

14. Dispositif d'arrêt selon l'une des revendications 1 à 13, **caractérisé en ce que** le dispositif d'arrêt possède un cadre (13) comprenant au moins deux éléments porteurs (13a, b) disposés sensiblement en parallèle et de configuration sensiblement allongée, de préférence l'arrangement d'accueil (2) étant disposé respectivement au niveau d'une extrémité longitudinale (14a, b) voisine des deux éléments porteurs (13a, b), notamment l'arrangement de poignée (3) étant disposé au niveau d'une zone de poignée (17a, b) respective des éléments porteurs (13a, b), notamment de manière angulaire par rapport à un axe longitudinal (16) des éléments porteurs (13a, b), encore de préférence **en ce que** les poignées individuelles (9a, b) sont disposées respectivement au niveau d'un élément porteur (13a, b).

15. Machine-outil (8) destinée à l'usinage du métal, notamment destinée à fabriquer des assemblages rivetés, comprenant un effecteur terminal (24), notamment destiné à poser des rivets, un système de commande (7) destiné à piloter l'effecteur terminal (24) et un dispositif d'arrêt selon l'une des revendications 1 à 14, **caractérisée en ce que** le système de commande (7) est conçu pour piloter l'effecteur terminal (24) par déclenchement sur le signal de commutation.
